# EUROPEAN PATENT APPLICATION

(11) **EP 2 677 357 A1**
(43) Date of publication of application: **25.12.2013**
(21) Application number: 13173051.7
(22) Date of filing: 20.06.2013
(51) Int. Cl.: G02B 6/44, H04Q 1/14

(54) **Optical cabling cassette for a data rack system**

(30) Priority: 20.06.2012 NL 2009038
(71) Applicant: Compose Beheer B.V., 5272 PA Sint Michielsgestel (NL)
(72) Inventor: Van Vught, Johannens Marinus Henricus, 5272 PA SINT MICHIELSGESTEL (NL)
(74) Representative: Algemeen Octrooi- en Merkenbureau B.V.

(57) **Abstract**

The invention relates to a cabling cassette for a data rack system. The cabling cassette comprises a cassette housing and a data cable that extends at least partly therein and that is provided with a data connector element at a first end. The data connector element is provided at a front of the cassette housing. According to the invention, a portion of the optical data cable remote from the coupling element exits the cassette housing through the front of the cassette housing, or at least exits the latter in a direction towards the front thereof.

## Description

The invention relates to a cabling cassette for a data rack system as described in the pre-amble of claim 1. The invention also relates to a coupling unit for this and to a method of arranging a data rack system as described in the pre-amble section of claim 12.

Data rack systems are generally known, for example in the form of an optical distribution frame (ODF). A rack frame consists of two vertically extending rails that are arranged at a distance from one another and parallel to one another. Screw holes are provided in each rail at the same levels, to which holes modules can be fastened. A plurality of modules can thus be suspended in a rack. The height of each module is normally a multiple of a rack unit U (7/4 inch or 44.45 mm) minus 1/32 inch to ensure an intermediate space. Such rack systems are often standardized.

The modules comprise optical cabling cassettes in an application for the distribution of speech and data information through optical glass fibre cables. These cassettes comprise housings that can be placed in the data rack. At a front of each cassette are provided a number of coupling bushes into which optical data cables (glass fibres) can be inserted. A standard arrangement comprises 8 rows of 12 data connectors each (a total of 96 connections). The cabling cassette comprises an optical data cable which comprises, for example, a bundle of 96 sub-cables. An end of each sub-cable is connected to one out of the total of 96 data connectors. The cabling cassette is mounted in situ in the location of the data rack, and the connections to the various data connectors are made. The optical data cable exits the data rack at the rear thereof.

It is a disadvantage of the known cassette system that its accessibility is limited. It is a disadvantage of the known data rack system that it requires comparatively much space. It is a further disadvantage that the completion of the data rack system is comparatively expensive and time-consuming because expert personnel must install the cassette and effect the necessary connections in situ.

It is accordingly an object of the present invention to provide an improved optical cabling cassette with which a fast and reliable installation in the location of the data rack system is possible.

It is a further object of the invention to provide an improved method of arranging a data rack system.

To achieve this object, the invention provides an optical cabling cassette of the kind mentioned in the opening paragraph which is **characterized in that** the cabling cassette can be placed fully mounted and ready for use in the data rack system. This is achieved in that a portion of the optical data cable remote from the first end exits the cassette housing through the front of the cassette housing, or at least exits the latter in a direction towards the front of the cassette housing.

The cabling cassette according to the present invention can be placed fully mounted and ready for use in a data rack system. The cabling cassette can be slid into the front of the data rack system in a simple manner since both the inlet side and the outlet side of the data cable exit the cabling cassette at the front thereof, or at least in that direction. This means that the data cable no longer extends both through the front and through the rear of the data rack system between the vertical rail elements that constitute the frame of the data rack system, as is the case in the prior art. This configuration according to the prior art has the consequence that the cable cannot be fastened to the cassette system until after it has been passed through the frame. This can only be done in situ. The cassette system according to the present invention offers a ready-made solution with which mounting work in situ is no longer necessary; instead, a fast, accurate and reliable prefab assembly can take place, for example, in a factory under high quality conditions. A simple fastening can then be effected in situ, for which no particular specialist skills are required. This renders possible a fast and reliable installation of the cabling cassette, whereby the object of the invention is achieved.

A particular feature of the invention is that the optical data cable does not pass through the plane defined by the rail elements of the data rack (rack frame plane), i.e. the cable may pass through it but it will also return again. When the cable is traced from one end to its other end, the number of times the cable passes through the rack frame plane in a first direction will be equal to the number of times it passes through said plane in the opposite direction. This ensures that the cable can be inserted and removed in a simple manner without the risk of getting looped around the rail elements of the data rack.

In an embodiment, the cassette housing comprises two housing parts that are hingeably joined to one another, such that a first one of the housing parts is connectable to the data rack system and the other one of the housing parts is provided with the data connector element. The hinged housing parts ensure that a front portion of the cassette housing can be pivoted away, also in the mounted state, such that the various connections between the data cable and the connector element can be made.

It should be noted in this connection that the data cable of the cassette system preferably comprises a number of sub-cables which are each connected to a respective data connector element. The cassette system preferably comprises 12 data connector elements arranged in a row. A multiple of 12 data connector elements, for example 24 data connector elements, is also conceivable, in which case one row of 12 data connector elements is placed on top of a previous row each time. It is possible in such a case that each row is constructed so as to be individually hinging or that the total assembly of rows can hinge as a unit.

Preferably, the cassette housing is provided with a storage facility in which an excess length of the data cable can be accommodated in the cassette housing. The excess length of the data cable can be stored in the storage facility of the cassette housing in a simple manner. Said storage facility may be, for example, a reel element around which the data cable can be wound.

It is preferred in the hinged construction that the storage facility is provided in the first housing part. This means that the excess length does not take part in the pivoting movement, whereby the risk of damage is minimized.

The cabling cassette preferably has a width of 48.26 cm (19 inches), although smaller or greater dimensions are possible. The height of a row of the cabling cassette is preferably 1.11 cm (1/4 U). The dimensions of the data cable may be adapted thereto.

In a particularly compact construction, the cassette housing comprises two plate parts which constitute the upper side and the lower side of the housing and which are kept at a distance from one another by spacer elements. The data cable and the data connectors are accommodated between said plate parts. The spacer elements are preferably chosen such that they have the same height as the data connectors. The housing can be given a particularly compact construction then.

The two plate parts are preferably designed so as to be one another's mirrored images, a mirror plane being formed between the plate parts. Such an embodiment renders it possible to choose, in the case of a hinging embodiment, in which direction the hinging housing part will pivot. The hinging movement takes place in a plane parallel to the upper side and lower side of the cassette housing. The user can determine by means of a suitable mounting choice whether the hinging movement is to the left or to the right.

According to an aspect of the invention, the latter provides a coupling unit for a data rack system, said coupling unit comprising a frame with connection means for connecting the coupling unit to the data rack system as well as coupling means for coupling a cabling cassette according to one of the preceding claims to the frame. The coupling unit renders a simple fastening of the cassette housing possible.

In a preferred embodiment, the coupling means comprise a groove or guide for receiving the cabling cassette via the front of the frame. The cabling cassette may for this purpose be provided with further coupling means that cooperate with said groove or guide such that a sliding coupling action is made possible.

The coupling unit is preferably designed for accommodating a plurality of individual cabling cassettes. Each of these cabling cassettes can be individually coupled therein, preferably in a sliding manner. In a special embodiment, the coupling unit is designed for accommodating a total of eight cabling cassettes. The coupling unit is thus given a standard vertical dimension of 2U (8.89 cm). It will be clear to those skilled in the art, however, that in principle any dimension may be chosen while still falling within the scope of protection of the appended claims.

According to an aspect of the invention, the latter provides a data rack system comprising a frame with vertically extending rail elements and a coupling unit as described above and/or a cabling cassette according to the invention. The first end of the optical data cable and an oppositely located end of the optical cable will be freely positioned at one side of the opening or can at least be so positioned. The advantages of such a data rack system have been explained above. It is particularly noted in addition that it is possible in such a data rack system to take out the individual cabling cassettes as desired without breaking the connection between the data cable and the data connector. This is not possible in data rack systems of the prior art.

The invention further provides a method of arranging a data rack system at a desired location, comprising the steps of:
- providing a data rack system in the desired location;
- constructing a cabling cassette comprising a cassette housing and an optical data cable, which cable extends at least partly therein and is provided at a first end with a coupling element, as well as a data connector element arranged at a front of the cassette housing for optically connecting a further optical data cable to the optical data cable.

The method is characterized by the step of connecting the optical data cable to the connector element at a distance from said location, whereupon the cabling cassette is placed fully mounted and ready for use in the data rack system in said location.

The invention renders a preliminary assembly possible whereby the specialist work of connecting the data cable to one or more data connectors can be carried out beforehand, and it suffices in situ to provide a simple connection between the cassette housing and the data rack system. Time and money can be saved in this way.

The cabling cassette according to the invention as described above is preferably used for this.

The method furthermore preferably comprises the step of fastening a coupling unit as described above.

The invention will now be described in more detail in a description of a preferred embodiment of the invention with reference to the accompanying figures, in which:
Figure 1 is a perspective view of a portion of a frame of a data rack system with a coupling unit and with a cabling cassette according to the present invention in an unconnected state;
Figure 2 is a perspective view of the frame of figure 1 with the cabling cassette inserted therein;
Figure 3 is a perspective view, partly broken away, of a data rack system with a cabling cassette;
Figure 4 is a perspective view, partly broken away, of a data rack system with a cabling cassette;
Figure 5 is a perspective view of a portion of a data rack system with a number of cabling cassettes according to the present invention arranged one above the other;
Figure 6 is a perspective view as in figure 5, showing a cabling cassette in its open hinged state; and
Figures 7a and 7b are plan views of cable shapes according to the prior art (7a) and according to the invention (7b).

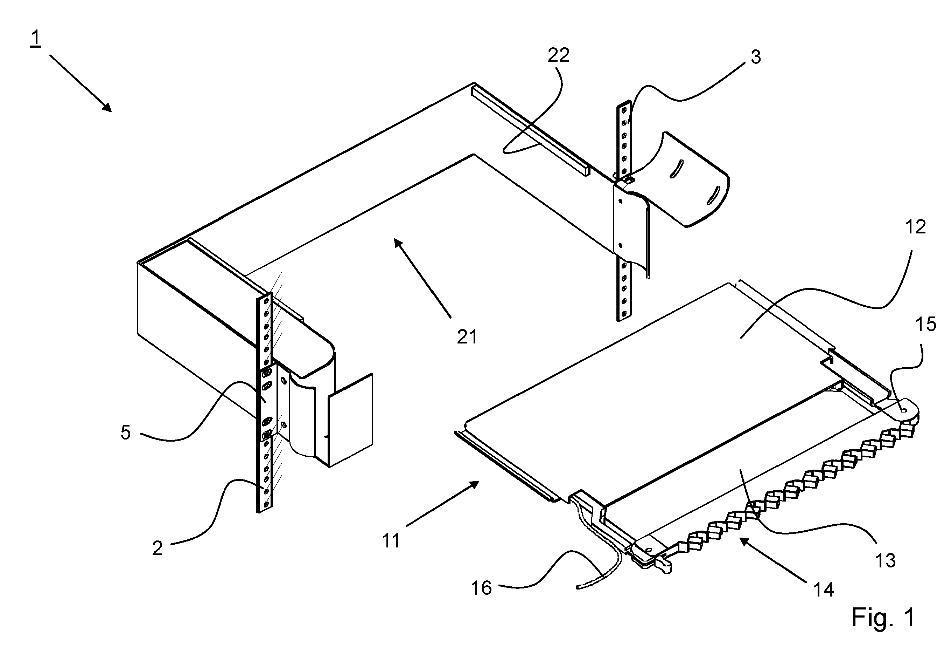

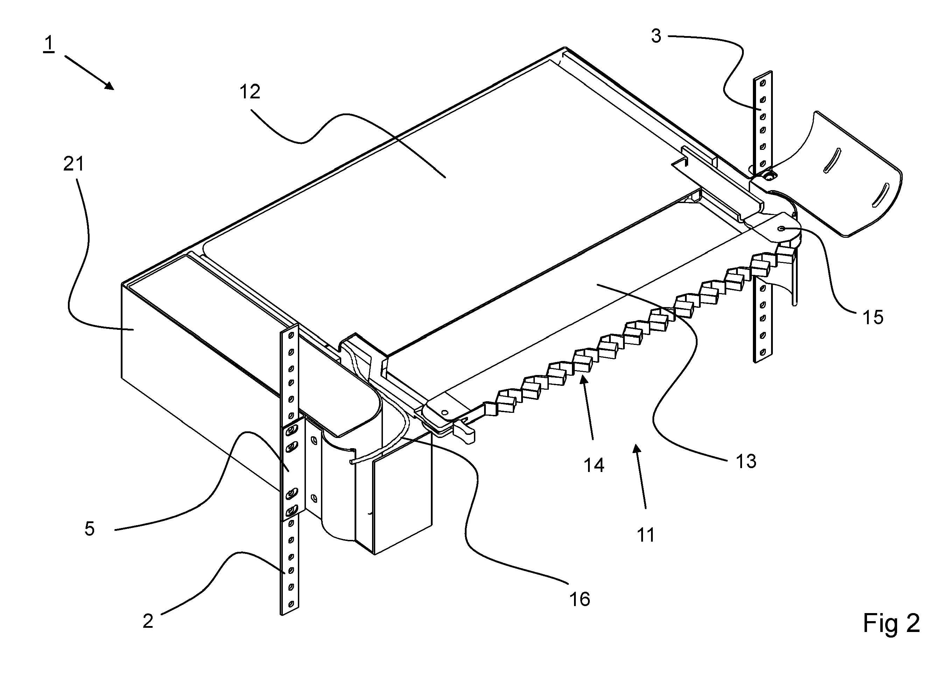

Figure 1 is a perspective view of a portion of a frame 2, 3 of a data rack system that is referenced 1 in its totality. The data rack system comprises two vertical supports or rails 2, 3 which are placed at a horizontal distance from one another. Holes are provided in the rails 2, 3. Electronic modules can be mounted to the frame 2, 3 of the data rack system 1 by means of these holes. A coupling unit 21 for a cabling cassette 11 is provided in the embodiment shown. This unit 21 can be fastened with connection means (not shown) in the holes 5 at a desired level. Such a fastening is known per se to those skilled in the art. The coupling unit 21 comprises a U-profile, the legs of the U being fastened to the rails 2, 3 of the frame. Coupling means 22 are provided in the coupling unit 21 at the inner sides of the legs of the U. The cabling cassette can be mounted to the data rack system with these coupling means 22. The coupling means are formed by a groove 22 in the embodiment shown, over which a mating elongate recess of the cassette 11 can slide (see also figure 2). Alternative coupling means, such as a slot, may obviously also be used.

The cassette 11 comprises a housing 12, 13 which is formed by a total of two parts 12, 13 which can pivot relative to one another by means of a hinge 15, as will be explained in more detail further below. A number of data connectors 14 are provided at the front of the housing. These connectors do not point straight forward, i.e. they are not arranged at right angles to the plane defined by the front surface, but they are at an angle thereto. This angle is approximately 45°, as can be seen.

As figure 2 shows, the cable 16 exits in forward direction through the data rack front face defined by the rail elements 2, 3. The connectors 14 for further optical data cables are also present at this side of the data rack face. The other end of the optical data cable is behind these connectors 14. So the cable does pass through the data rack front face, but it also returns through it. In other words, the cable 16 does not interrupt the data rack front face and as a result cannot become entangled there. The cabling cassette 11 can thus be mounted and dismounted in a simple manner without the necessity of detaching a connection at an end of the data cable 16.

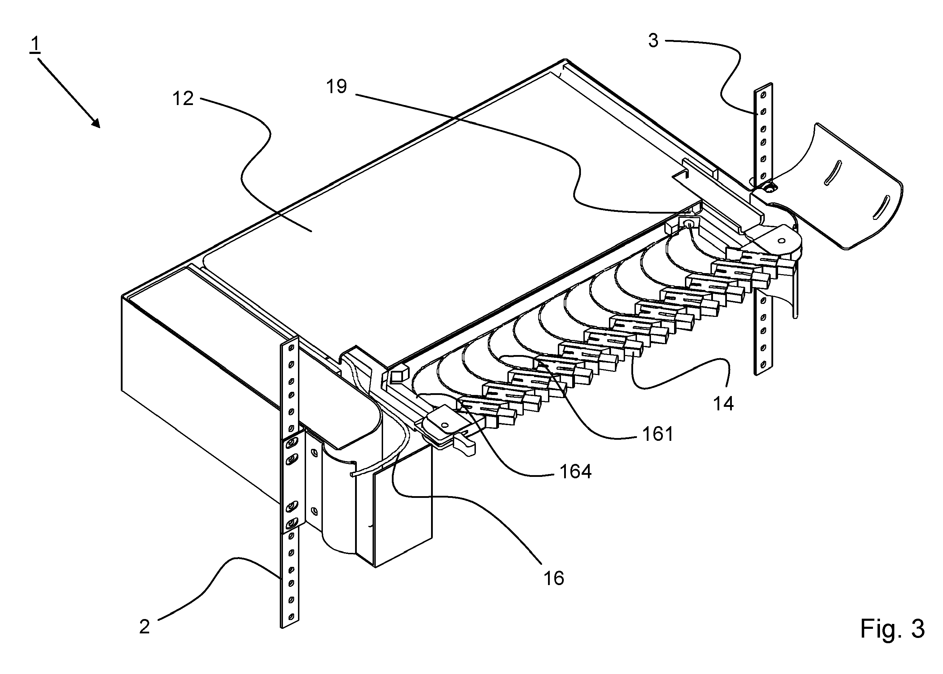

Figure 3 shows the interior of the front part 13 of the cabling cassette 11. It is clearly apparent therefrom that the data cable 16 comprises a number of sub-cables 161-164 (12 in total in the embodiment shown). The cable is split up into said number of sub-cables, which are movable relative to one another, at the area of the fastening 19. The sub-cables are each individually connected in a detachable manner to an associated data connector element 14 in the form of a coupling bush by means of a coupling element, a standard optical connector in the present case. Two coupling elements can be placed in the coupling bush so as to connect two optical cables to one another. An optical cable can be connected at the front of the cabling cassette in this manner. A further optical data cable (not shown) can accordingly be connected to one of the optical data cables 16, i.e. to one of the optical sub-cables 161-164. The coupling element of such a sub-cable 161-164 is connected to a portion of the data connector element 14 that is directed towards the interior of the cabling cassette. The further optical data cable is connected to, or can at least be connected to, a portion of the data connector element 14 that faces away from the interior of the cabling cassette.

It is obviously possible to use a different number of sub-cables and to use alternative connection means or connectors.

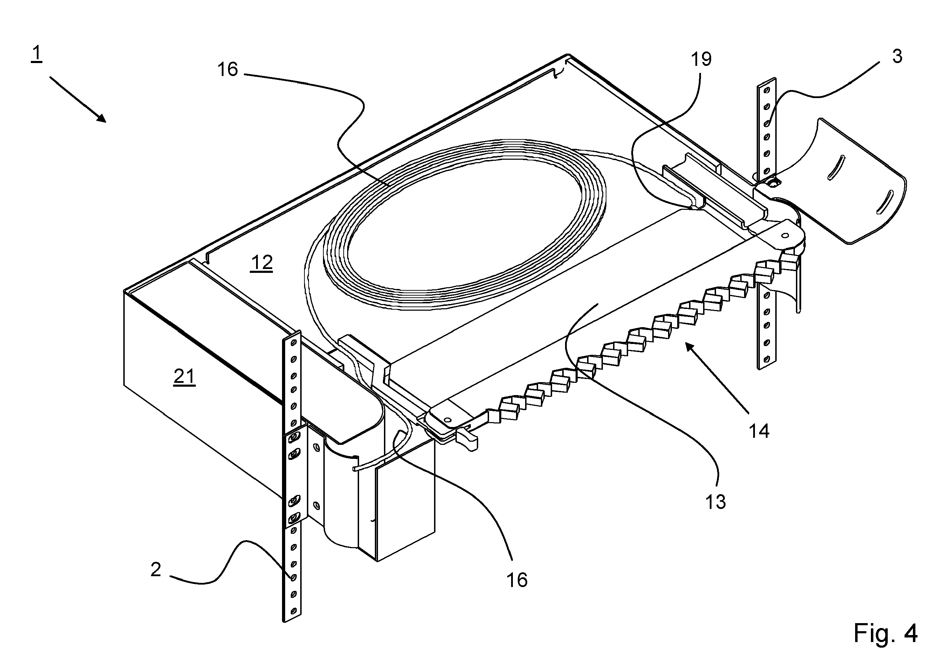

Figure 4 shows the interior of the rear part 12 of the cabling cassette. It is apparent therefrom that the data cable 16 has been rolled up and stored in the interior in that state. Any excess length of the data cable can thus be easily accommodated in the interior. Storage means (not shown) may be present such that the rolled-up state of the cable 16 is maintained. It is conceivable that there are a few fastening points by means of which the cable is fixedly held to the rear part 12 of the cabling cassette in a few spots. A reel may be used to store the rolled-up portion of the excess length.

Figure 4 also clearly shows that the cable 16 exits the housing 12 at the front thereof, or at least in a direction towards the front of the cassette housing. Instead of continuing via the rear, as is usual in the prior art, the cable runs from the data connector element first to the rear and then to the front again towards the front face of the cassette housing (where the data connector elements are), whereupon it continues in a lateral direction.

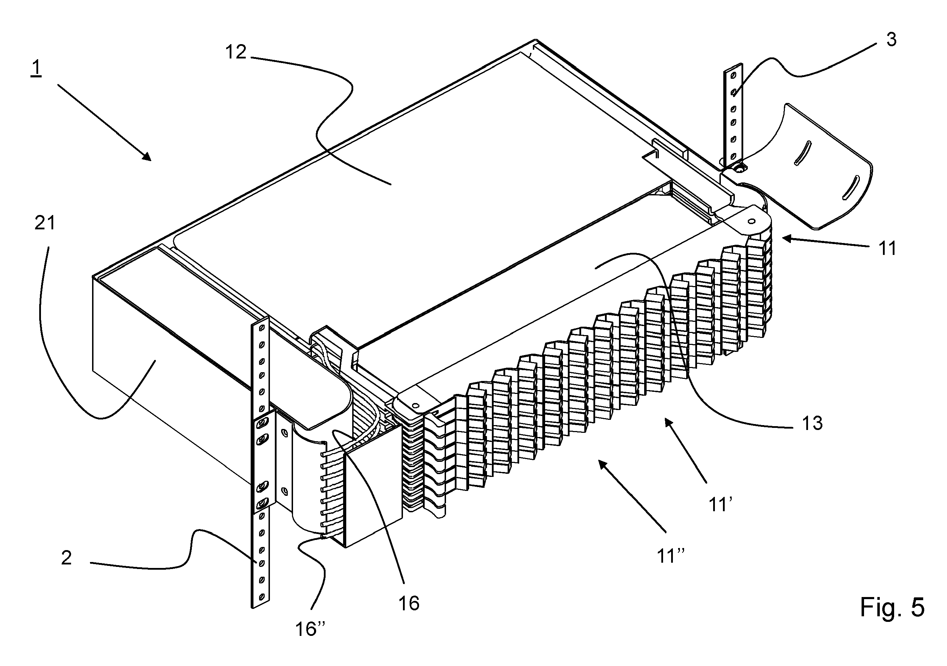

Figure 5 shows the data rack system 1 with a number of cabling cassettes 11, 11', 11" in an assembled state. A total of eight cabling cassettes 11, 11', 11" are mounted to the frame 2, 3 of the data rack system 1 by means of a coupling unit 21. Since each cabling cassette 11 is provided with a total of 12 connection points (data connectors), preferably optical connectors, the total number of connections for this coupling unit 21 is (8 x 12 =) 96.

One data cable 16, 16" extends along the front of the rails 2, for example to a rear portion of the data rack system, for each cabling cassette. Each data cable 16 comprises a number of sub-cables as shown in and explained with reference to figure 3, such that each data connector 14 of each cabling cassette is connected to a sub-cable.

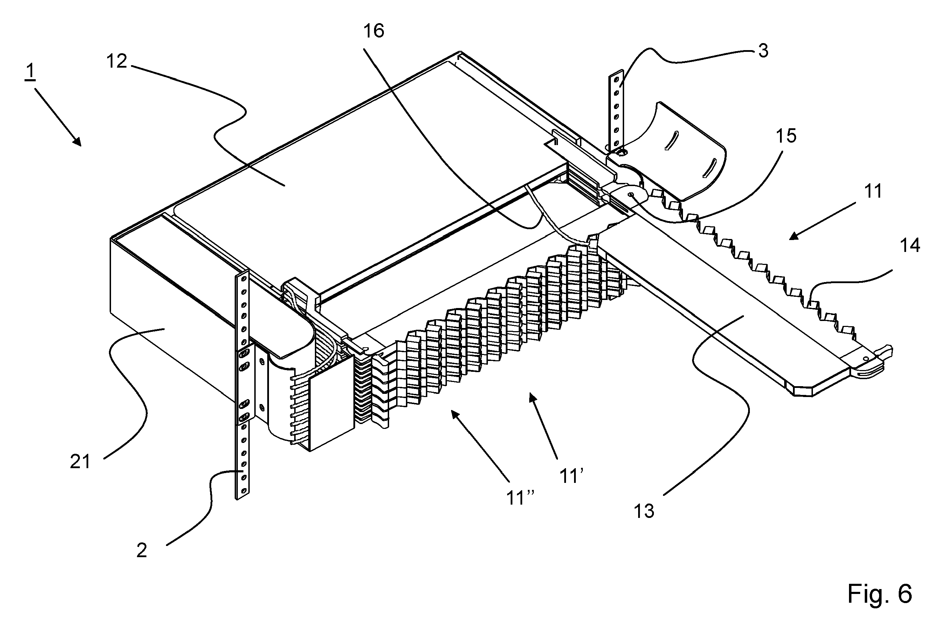

Figure 6 finally shows that a front part 13 of the cabling cassette is pivotable in the horizontal plane about a hinge 15. The front part 13 can thus rotate away from the rear part. The individual connections to the data connector elements 14 can thus be made and maintenance jobs can be carried out in a simple manner without deactivating the other connections. In an embodiment, the front part 13 of the cabling cassette can be detachably fastened to the rear part 12. The front part 13 can as it were be snapped home and snapped off again at the hinge 15.

The cabling cassette according to the present invention can be assembled in advance. The cabling cassette can be simply inserted into the data rack system in a sliding action. Connections between the data cable and the individual connectors have already been made, so that these actions need not be performed at the location any more. The pre-assembly ensures that high quality requirements can be complied with in a comparatively simple manner.

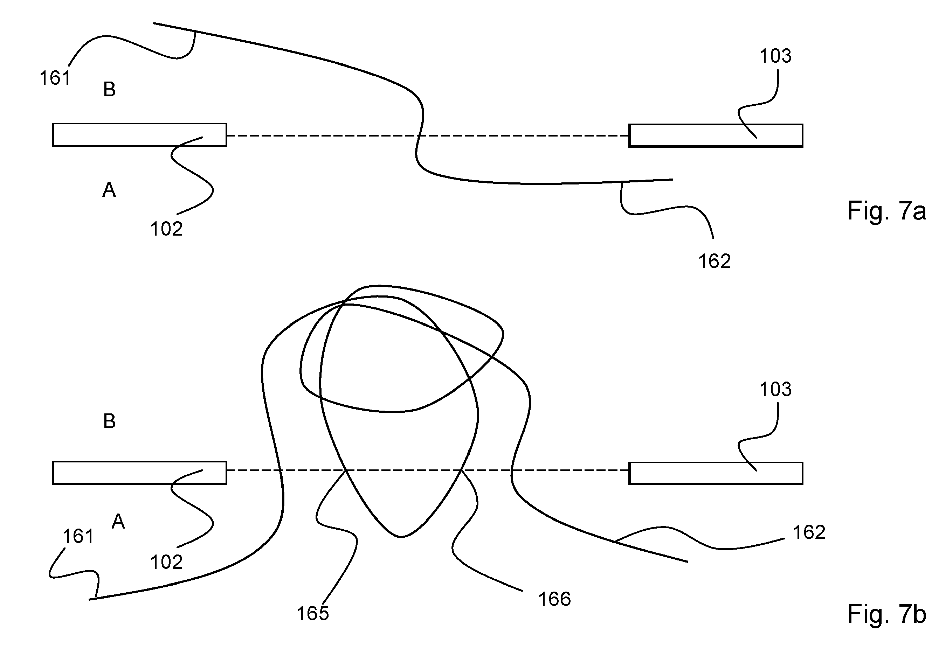

Figure 7 clearly demonstrates how the cabling in the form of an optical data cable does not pass through the plane defined by the rail elements of the frame. Figure 7a shows the prior art, where the data cable is situated with one end 162 at a first side A of the rail elements 102, 103 of the data rack, while the other end 161 is situated at the other side B of the rail elements 102, 103. Figure 7b shows the situation according to the present invention, where the optical data cable does not pass through the plane defined by the rail elements 102, 103 of the data rack (rack front face, indicated by a broken line), or rather, the cable may go through the plane but it will eventually return again. When the cable is traced from its one end 161 to the other end 162, the number of times the cable passes through said plane in one direction will be equal to the number of times it passes through said plane in the opposite direction. The loop 165, 166 shows that it is quite possible for the cable to return once (at 165) and then pass through again (at 166), but the two ends 161, 162 of the cable both lie at the side A of the data rack.

It will be apparent to those skilled in the art that the invention has been described above with reference to a few preferred embodiments. The invention, however, is by no means limited to these embodiments. Many equivalent modifications are conceivable which may fall within the scope of protection applied for in the appended claims.

## Claims

1. An optical cabling cassette for a data rack system comprising a cassette housing and, connected thereto and extending at least partly therein, an optical data cable which is provided with a coupling element at a first end, said optical cabling cassette being provided at a front thereof with a data connector element for optically connecting the optical data cable to a further optical data cable, wherein said coupling element is connected or at least connectable to a portion of the data connector element that is directed towards the interior of the cabling cassette, and wherein the further optical data cable is connected or at least connectable to a portion of the data connector element that is directed away from the interior of the cabling cassette, **characterized in that** the cabling cassette can be placed fully mounted and ready for use in the data rack system owing to the fact that a portion of the optical data cable remote from the coupling element exits the cassette housing through the front of the cassette housing, or at least exits the latter in a direction towards the front of the cassette housing.

2. A cabling cassette according to claim 1, wherein the cabling cassette comprises a plurality of optical data cables, and wherein the cabling cassette can be placed fully mounted and ready for use in the data rack system owing to the fact that each of the optical data cables accommodated in the optical cabling cassette exits the cassette housing through the front of the cassette housing, or at least exits the latter in a direction towards the front of the cassette housing.

3. A cabling cassette according to claim 1 or 2, wherein the cassette housing comprises two housing parts that are hingeably joined to one another, wherein a first one of the housing parts is connectable to the data rack system, and wherein the other one of the housing parts is provided with the data connector element.

4. A cabling cassette according to claim 1, 2 or 3, wherein the cassette housing is provided with a storage facility in which an excess length of the optical data cable can be accommodated inside the cassette housing.

5. A cabling cassette according to claims 3 and 4, wherein the storage facility is provided in the first housing part.

6. A cabling cassette according to any one of the preceding claims, wherein the cabling cassette is 1.11 cm (1/4 U) high.

7. A cabling cassette according to any one of the preceding claims, wherein the cassette housing comprises two plate parts which constitute the upper side and the lower side of the housing and which are kept at a distance from one another by spacer elements, wherein in particular the two plate parts are shaped such that a mirror plane for the plate parts is formed between these plate parts.

8. A coupling unit for a data rack system comprising a frame with connection means for connecting the coupling unit to the data rack system and coupling means for coupling a cabling cassette according to any one of the preceding claims to the frame.

9. A coupling unit according to claim 8, wherein the coupling means comprise a groove or guide for receiving the cabling cassette via the front of the frame.

10. A coupling unit according to claim 8 or 9, wherein the coupling unit is designed for accommodating therein more than one cabling cassette, for example a total of eight cabling cassettes.

11. A data rack system comprising a frame with two vertically extending rail elements which are arranged at a horizontal distance to one another so as to form an insertion opening, as well as a coupling unit according to any one of the preceding claims 8 to 10 connected to the frame and/or a cabling cassette according to any one of the preceding claims 1 to 7 connected to the frame, wherein the cabling cassette can be freely taken from the data rack system owing to the fact that the coupling element of the optical data cable and an oppositely located end of the optical cable are placed, or at least can be placed, freely at one side of the opening.

12. A method of arranging a data rack system at a desired location, comprising the steps of:
- providing a data rack system in the desired location;
- constructing a cabling cassette comprising a cassette housing and an optical data cable, which cable extends at least partly therein and is provided at a first end with a coupling element, as well as a data connector element arranged at a front of the cassette housing for optically connecting a further optical data cable to the optical data cable,
which method is **characterized by** the step of connecting the optical data cable to the connector element at a distance from said location, whereupon the cabling cassette is placed fully mounted and ready for use in the data rack system in said location.

13. A method according to claim 12, wherein the cabling cassette is a cassette as defined in any one of the preceding claims 1 to 7.

14. A method according to claim 12 or 13, wherein the method comprises a step of fastening a coupling unit according to claim 8, 9 or 10 to the data rack system.
